# EUROPÄISCHE PATENTANMELDUNG

(11) **EP 3 366 448 A1**
(43) Veröffentlichungstag der Anmeldung: **29.08.2018**
(21) Anmeldenummer: 18167769.1
(22) Anmeldetag: 08.07.2011
(51) Int. Cl.: B29C 45/76, B29K 67/00, B29K 105/26, G01N 11/08, G01N 33/44, B29B 13/00, B29B 17/00, B29C 31/00, B29C 31/08, B29C 49/06, B65B 3/02

(54) **ANLAGE UND VERFAHREN ZUR KONTINUIERLICHEN HERSTELLUNG VON PREFORMS**

(30) Priorität: 26.10.2010 DE 102010042958
(62) Teilanmeldung aus: 11173268.1
(71) Anmelder: Krones AG, 93073 Neutraubling (DE)
(72) Erfinder: Forsthövel, Jochen, 93059 Regensburg (DE)
(74) Vertreter: Grünecker Patent- und Rechtsanwälte PartG mbB

(57) **Zusammenfassung**

In einer Anlage (A) zur kontinuierlichen Herstellung von Preforms (P) für Kunststoff-Behälter unter Verwendung von zumindest Polyester-Rezyklat für die Nahrungsmittel-Abfüllung, wobei die Anlage (A) wenigstens eine schmelzebildende Stromauf-Anlagensektion (1) und eine Preforms (P) erzeugende Spritzgieß-Anlagensektion (2) und eine Anlagensteuerung umfasst, sind zumindest die schmelzebildende Stromauf-Anlagensektion (1) und die Spritzgieß-Anlagensektion (2) an einer Schnittstelle (4) zu einem Anlagenblock (B) verblockt, und ist zur Ableitung von Prozessänderungs- und/oder Preformqualifizierungs-Strategien an der Schnittstelle (4) eine Inline-Messstation (9) mit einer Auswerteeinrichtung (21) für wenigstens einen im Prozessablauf gemessenen Qualitätsparameter der Schmelze vorgesehen.

## Beschreibung

Die Erfindung betrifft eine Anlage gemäß Oberbegriff des Patentanspruchs 1 sowie ein Verfahren gemäß Oberbegriff des Patentanspruchs 10.

Wird der Prozessablauf nach der Schmelzebildung zur Messung und Auswertung von Qualitätsparametern der Schmelze unterbrochen, dann wird aus dem Recyclingprozess vorhandene Wärme vergeudet und ist erhöhter logistischer Aufwand notwendig. Ein zu hoher Acetaldehydgehalt der Schmelze, beispielsweise verursacht durch eine zu starke Scherung und zu hohe Temperatur während des Recyclingprozesses, kann zur geschmacklichen Beeinträchtigung bei geschmacksarmen Nahrungsmitteln wie stillen Wässern führen, wenn diese in die aus den Preforms hergestellten Kunststoffbehälter eingefüllt werden. Da die Qualität chargenweise in den Recyclingprozess eingebrachten Kunststoffmaterials, insbesondere PET-Flakes, naturgemäß fluktuiert muss zum Einhalten eines vorbestimmten Qualitätsstandards der Schmelze der Prozessablauf bis zum Austritt der Schmelze geregelt werden. Hierzu ist es üblich, Proben der Schmelze oder des Rezyklats zu nehmen und in Labortests zu untersuchen, beispielsweise um zur Regelung des Prozessablaufes Messresultate zum Acetaldehydgehalt und/oder zur intrinsischen Viskosität und/oder der Farbe und/oder den Gehalt anderer Kontaminanten der Schmelze bzw. des Rezyklats zu erhalten. Eine solche Anlage zum Herstellen der Schmelze unter Verwendung eines Rezyklats wird beispielsweise in DE 10 2005 013 701 A1 offenbart. Ein unterbrechungsbehafteter Zwischenschritt zur Messung und Auswertung von Qualitätsparametern der Schmelze bedeutet eine akute Schwachstelle im Prozessablauf, auf die der Anlagenhersteller keinen Einfluss hat, der die Anlage so konzipiert hat, dass die nachfolgende Befüllung mit Nahrungsmitteln unter den bestimmten Qualitätsstandards für das jeweilige Nahrungsmittel erfolgt. So werden beispielsweise bei der üblichen Vorgangsweise mit Probenahme, Messung der Probe und Auswertung der Messresultate einen vorbestimmten Toleranzbereich verlassende Auswertungsresultate zum Anlass genommen, den Stromauf-Prozessablauf korrigierend zu verändern, gegebenenfalls zunächst weiterhin gebildete Schmelze zu verwerfen oder aus weiterhin gebildeter Schmelze hergestellte Preforms auszusondern oder als B-Qualität zu identifizieren und für weniger delikate Nahrungsmittel oder andere Zwecke einzusetzen, oder hergestellte Kunststoffbehälter vor der Befüllung grundsätzlich zu inspizieren und kontrollieren, um nicht zulässige Kombinationen von Kunststoffbehältern minderer Qualität mit bestimmten Nahrungsmitteln ausschließen zu können. Der logistische Aufwand hierfür ist hoch. Damit verbundene Unterbrechungen sind kostenintensiv. Zumindest vom Anlagenhersteller wird unter anderem aus diesen Gründen angestrebt, Anlagensektionen miteinander zu verblocken, um durch eine Trennung bedingte Fehlerquellen zu eliminieren, was jedoch bisher deshalb nicht möglich war, weil eine Verblockung mangels Zugriffsmöglichkeiten das Beherrschen unvermeidbarer Qualitätsparameterfluktuationen verwehrt.

In DE 10 2010 002 054.0 mit älterem Zeitrang werden bereits ein Verfahren und eine Anlage zum Herstellen von Behälter-Preforms vorgeschlagen, bei denen in einer Anlage eine Recyclingmaschine mit einer Preformmaschine direkt oder über wenigstens einen Zwischenspeicher so verbunden ist, dass von einer Wärmebehandlung des Kunststoffmaterials in der Recyclingmaschine eingebrachter Wärme zumindest ein Großteil mit dem Kunststoffmaterial in die Preformmaschine transferierbar ist. Auf die Messung von Qualitätsparametern des hergestellten Kunststoffmaterials und/oder die Steuerung bzw. Regelung des Prozessablaufes unter Berücksichtigung von Qualitätsparametern wird dabei nicht eingegangen.

Der Erfindung liegt die Aufgabe zugrunde, eine Anlage und ein in der Anlage durchzuführendes Verfahren anzugeben, mit denen bei reduziertem logistischen Aufwand die Wärme aus dem Recyclingprozess besser nutzbar und dennoch unvermeidliche, exzessive Fluktuationen von Qualitätsparametern der Schmelze soweit problemlos beherrschbar sind, dass in aus den Preforms hergestellten Kunststoffbehältern stets der für das jeweilige, einzufüllende Nahrungsmittel erforderliche Qualitätsstandard einhaltbar ist.

Die gestellte Aufgabe wird mit den Merkmalen des Patentanspruchs 1 vorrichtungstechnisch und mit den Merkmalen des Patentanspruchs 10 verfahrenstechnisch gelöst.

Da in der Anlage zumindest die Stromauf-Anlagensektion, von der die plastifizierte Schmelze abgegeben wird, und die Spritzgieß-Anlagensektion, in der aus der Schmelze mit unterbrechungsfreiem Prozessablauf die Preforms hergestellt werden, miteinander verblockt sind, lässt sich die in der Schmelze enthaltene Wärme aus dem Recyclingprozess bei reduziertem logistischem Aufwand besser für die Preform-Herstellung nutzen, und ist die akute Fehlerquelle einer Trennung zwischen den Anlagensektionen beseitigt. Der Anlagenhersteller gewinnt damit auch Einfluss auf einen korrekten Ablauf im Übergang zwischen den miteinander verblockten Anlagensektionen. Die an der Schnittstelle vorgesehene Inline-Messstation mit Auswerteeinrichtung ermöglicht trotz der Verblockung die permanente oder intermittierende Messung und Auswertung zumindest eines signifikanten Qualitätsparameters der Schmelze während des Prozessablaufes, und schafft somit die Voraussetzung, Prozessänderungs- und/oder Preformqualifizierungs-Strategien abzuleiten, ohne den Prozessablauf notwendigerweise unterbrechen zu müssen. Mittels des Messresultats und des Auswertungsergebnisses lässt sich trotz der Verblockung sicherstellen, dass der mit einem Nahrungsmittel befüllte Kunststoffbehälter dem Qualitätsstandard für dieses Nahrungsmittel entspricht, weil entweder Schmelze minderer Qualität ausgesondert oder Preforms bzw. Behälter minderer Qualität ausgesondert, Preforms oder Behälter minderer Qualität als B-Qualität identifiziert und zur Verwertung mit speziellen Nahrungsmitteln gehindert oder der Betreiber zumindest gewarnt oder letztendlich die Anlage gestoppt werden kann, sofern die abgeleiteten und realisierten Strategien nicht zum Erfolg geführt haben sollten. Da die Inline-Messung und Auswertung und Überwachung des zumindest einen Qualitätsparameters der Schmelze es ermöglicht, durch Aussonderung mangelhafter Schmelze, Preforms oder sogar Behälter sicherzustellen, dass bei der späteren Befüllung mit dem Nahrungsmittel der erforderliche Qualitätsstandard des Kunststoffbehälters gegeben ist, braucht der Prozessablauf nicht insgesamt unterbrochen zu werden, da sichergestellt ist, dass die zum jeweiligen Nahrungsmittel passenden Kunststoffbehälter befüllt werden, und keine Kunststoffbehälter mit mangelhaftem Qualitätsstandard. Die Inline-Messstation mit der Auswerteeinrichtung zur Messung während des Prozessablaufs resultiert in Kombination mit der Verblockung der Anlagensektionen in einer leicht realisierbaren Sicherstellung des erforderlichen Qualitätsstandards, und bildet eine Basis, noch mehrere Anlagensektionen einschließlich eines Füllers und gegebenenfalls sogar einer Verpackungs-Anlagensektion zu einer insgesamt verblockten Gesamtanlage, in der der Anlagenhersteller dem Anwender nicht nur eine problemlose Handhabung an die Hand gibt, sondern auch von vornherein für den jeweils erforderlichen, gegebenenfalls hohen Qualitätsstandard entweder der Behälter oder der gefüllten Behälter sicherstellen kann.

Verfahrensgemäß ermöglicht die Messung und Auswertung zumindest eines signifikanten Qualitätsparameters der Schmelze während des unterbrechungsfreien Prozessablaufs die Ableitung und Anwendung von Prozessänderungs- und/oder Preformqualifizierungs-Strategien ohne die Notwendigkeit einer Prozessunterbrechung und trotz der an sich eine Probenahme der Schmelze verhindernden Verblockung von Anlagensektionen in einem Anlagenblock, der modernen Anforderungen an optimale Energienutzung und Qualitätssicherung gerecht wird und eine universelle Basis zur weiteren Verblockung mit Anlagensektionen bietet, die Anwendern eine für einen automatischen Betriebsablauf mit hohem Qualitätsstandard geeignete Komplettanlage an die Hand gibt.

Bei einer zweckmäßigen Ausführungsform der Anlage von Anspruch 1 umfasst die Inline-Messstation wenigstens eine Unterbaugruppe zum Messen der intrinsischen Viskosität und/oder ausgewählter Kontaminanten und/oder der Farbe der Schmelze, vorzugsweise mindestens zwei Unterbaugruppen.

Bei einer zweckmäßigen Ausführungsform ist ferner die Auswerteeinrichtung, vorzugsweise über die Anlagenprozessteuerung, verbunden mit einer Prozessparameter-Regelvorrichtung und/oder einer Acetaldehyd-Blocker- bzw. -Scavenger-Zudosiereinrichtung und/oder einer Anfangskomponenten-Mischungseinstelleinrichtung und/oder einer Preform- bzw. Behälteraussonderungs- und/oder Qualifizier-Einrichtung. Während des Prozessablaufs lassen sich trotz der Verblockung somit anhand des Auswertungsergebnisses Maßnahmen bzw. Strategien durchführen, die den gewünschten Qualitätsstandard der Schmelze und damit der später aus der Schmelze erzeugten Kunststoffbehälter, vorzugsweise PET-Flaschen, sicherstellen bzw. es ermöglichen, das in der Anlage zum Einfüllen verarbeitete Nahrungsmittel in einen Kunststoffbehälter abzufüllen, der den richtigen Qualitätsstandard hat.

In einer zweckmäßigen Ausführungsform weist die Messstation wenigstens einen mit Inertgas gespülten, von der Schmelze durchsetzten Raum auf, und ist in wenigstens einem Abgasströmungsweg aus dem Raum wenigstens ein Gaschromatograph angeordnet.

Bei einer anderen Ausführungsform wird die intrinsische Viskosität als ein Vergleichsmaß für die Molekülkettenlängen in der Schmelze mit einer Schmelze-Temperaturerfassung und einer Schmelze-Durchflussblende gemessen, über die eine ein Messresultat liefernde Druckdifferenz direkt im Schmelzestrom oder in einem Schmelze-Bypassstrom erzeugt wird.

Bei einer weiteren Ausführungsform kann zur Farbmessung eine Schmelze-Durchleuchtvorrichtung vorgesehen sein, wobei, vorzugsweise, durch die Schmelze transmittiertes Licht über wenigstens einen Lichtleiter nach außen übertragen und dort gemessen und mit einer Referenz verglichen wird.

In einer zweckmäßigen Ausführungsform ist die Messstation stromab einer Schmelze-Filtrationseinrichtung in der Stromauf-Anlagensektion platziert. Eine geeignete Stelle zur Platzierung der Messstation wäre beispielsweise ein Shooting-Pot und/oder ein Heißkanalverteiler der Spritzgieß-Anlagensektion, weil an dieser Stelle ein Übergang von einem Prozessschritt der Schmelzebildung zu einem anderen Prozessschritt der Preformherstellung stattfindet und dort gezielt eingegriffen werden kann.

Bei einer alternativen Ausführungsform weist die Spritzgieß-Anlagensektion eine Preform-Nachkühlstrecke mit Kühlhülsen auf und ist im Bereich der Nachkühlstrecke eine Farbmessstation angeordnet, vorzugsweise mit einer auf den Mündungsbereich jeder Preform in einer Kühlhülse gerichteten Beleuchtungsquelle.

Bei einer besonders zweckmäßigen Ausführungsform ist der Anlagenblock aus der mit dem Stromauf-Anlagensektion verblockten Spritzgieß-Anlagensektion zusätzlich mit einer Behälter-Blasform-Anlagensektion verblockt, mit der, vorzugsweise, zumindest eine Füller-Anlagensektion ebenfalls verblockt ist, so dass der gesamte Anlagenblock aus den miteinander verblockten Anlagensektionen einen kontinuierlichen Prozessablauf entweder bis zu den fertigen Kunststoffbehältern oder den sogar schon befüllten Kunststoffbehältern ermöglicht, wobei keine akute Fehlerstellen bildenden Unterbrechungen zwischen den Anlagensektionen mehr vorliegen. Dies liegt in dem von den Anlagenherstellern und Anwendern angestrebten Trend von Komplettanlagen mit automatischem Prozessablauf und hoher Qualität. Dabei ist es sogar möglich, in einer solchen Komplettanlage mit der Füller-Anlagensektion, z.B. über wenigstens einen Verschließer, eine Verpackungs-Anlagensektion zu verblocken, so dass der Anwender an der Ausstoßseite des Gesamtanlagenblocks das fertige verpackte Produkt erhält, für welches dank der Verblockung und der Messstation eine gleichbleibend hohe Endqualität gewährleistbar ist.

Additiv zur Lösung gemäß Anspruch 1 umfasst der Anlagenblock auch eine mit der Stromauf-Anlagensektion verblockte Dekontaminations-Anlagensektion, oder auch eine verblockte Aufbereitungs-Anlagensektion und eine verblockte Material-Aufgabe-Anlagensektion umfassen, so dass letztendlich ein Gesamtanlagenblock realisiert ist.

Bei dem in der Anlage durchführbaren Verfahren gemäß Anspruch 10 wirdwenigstens ein ausgewählter Schmelze-Kontaminant gemessen, und zwar über den Gehalt der Schmelze und mit einer gaschromatographischen Messung, vorzugsweise in einer Inertgas-Spülströmung, der die gebildete Schmelze ausgesetzt wird.

Die intrinsische Viskosität der Schmelze gemäß Anspruch 10 wird dadurch gemessen und ausgewertet, dass die Temperatur der Schmelze detektiert und die Schmelze durch eine Blende gepresst wird, über die eine Druckdifferenz entsteht, die als repräsentativ für die intrinsische Viskosität ausgewertet werden kann. Die intrinsische Viskosität steht in einem Verhältnis zur Molekülkettenlänge, welche wiederum für die Festigkeit und Formstabilität eines Kunststoffbehälters wesentlich ist.

Die Schmelze wird durchleuchtet, um die Farbe zu messen. Dies ist beispielsweise mit Fotozellen mit Farbfiltern einfach durchführbar.

Der zumindest eine Qualitätsparameter der Schmelze wird während des Prozessablaufes entweder kontinuierlich gemessen und ausgewertet und zur Ableitung von Strategien verwendet, oder intermittierend in vorbestimmten Zeitabständen, um bei verringertem Messaufwand dennoch zeitgerecht einen Trend einer Abweichung des jeweiligen Qualitätsparameters festzustellen und Gegenmaßnahmen einleiten zu können.

Bei einer zweckmäßigen Verfahrensvariante wird beispielsweise nach Auswertung des Messresultats bei positivem Auswertungsergebnis, vorzugsweise bei Herausfallen des Messresultats aus einem vorbestimmten Toleranzbereich, eine Plastifizierungsdrehzahl eines Extruders geändert und/oder eine Zykluszeit im Extruder oder in anderen Prozessstufen und/oder eine Zudosierung beispielsweise eines Kontaminanten-Blockers und/oder -Scavengers unter Regelung geändert.

Gemäß einer weiteren Verfahrensvariante wird bei positivem Auswertungsergebnis, vorzugsweise bei Herausfallen des Messresultats aus einem vorbestimmten Toleranzbereich, vorzugsweise bis zum Vorliegen eines wieder negativen Auswertungsergebnisses, die weiterhin gebildete Schmelze ausgesondert, oder werden mit weiterhin gebildeter Schmelze hergestellte Preforms oder aus diesen Preforms blasgeformte Kunststoffbehälter ausgesondert oder als qualitativ minderwertig identifiziert, und/oder wird zumindest eine Anlagenbetriebswarnung generiert, um die exzessive Fluktuation des jeweiligen Qualitätsparameters kundzutun.

Zweckmäßig wird ferner bei einer weiteren Verfahrensvariante dann die Anlage gestoppt, vorzugsweise automatisch über die Anlagenprozesssteuerung, falls ein positives Auswertungsergebnis über eine vorbestimmte Zeitdauer nicht mehr zum Verschwinden gebracht werden kann.

Bei einer besonders zweckmäßigen Verfahrensvariante wird der wenigstens eine Qualitätsparameter der Schmelze in einer Anlage gemessen und ausgewertet und zum Ableiten von Strategien benutzt, in welcher mit der Spritzgieß-Anlagensektion zumindest eine Behälter-Blasform-Anlagensektion und mit dieser eine Füller-Anlagensektion verknüpft sind, und, vorzugsweise, mit der Füller-Anlagensektion sogar eine Verpackungs-Anlagensektion, vorzugsweise über einen Verschließer, und/oder stromauf liegende Anlagensektionen mit der Stromauf-Anlagensektion verblockt sind, so dass der Benutzer das Verfahren mit vollautomatischem Prozessablauf in einem einzigen Anlagenblock oder einer Gesamtanlage durchzuführen vermag, und der Anlagenhersteller von vornherein sein Know-how und seine Sach- und Verfahrenskenntnis ohne nennenswerte Gefahr absichtlicher oder unabsichtlicher Fremdeinflüsse im späteren Prozessablauf implementieren konnte.

Anhand der Zeichnung werden Ausführungsformen des Erfindungsgegenstandes erläutert.

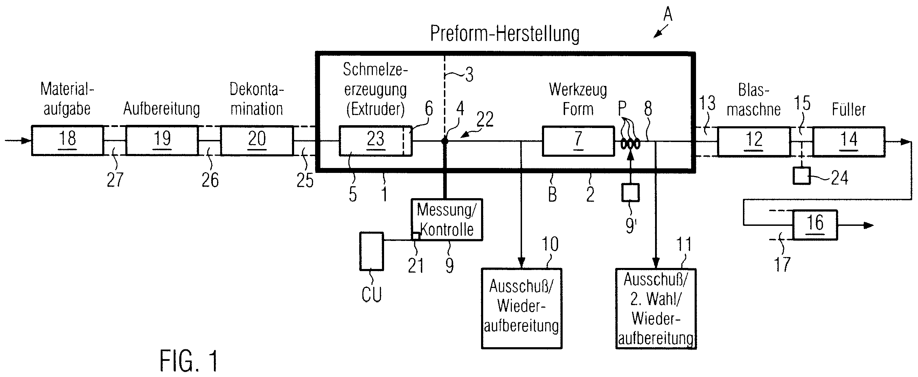

Fig. 1 ist eine Schemadarstellung einer Anlage, wobei in derselben Figur unterschiedliche Anlagenkonfigurationen angedeutet sind.

Fig. 1 verdeutlicht schematisch eine Anlage A zur kontinuierlichen Herstellung von Preforms P unter Verwendung von zumindest Polyester-Rezyklat, typischerweise PET-Flakes oder -Chips. Aus den hergestellten Preforms P werden Kunststoffbehälter blasgeformt, typischerweise PET-Flaschen, die für die Nahrungsmittel-Abfüllung bestimmt sind und mit einem Nahrungsmittel befüllt, verschlossen und zweckmäßig verpackt werden, wobei der jeweilige Kunststoffbehälter für das jeweilige Nahrungsmittel einen bestimmten Qualitätsstandard haben muss.

Kern der Anlage A ist in einer Ausführungsform ein Anlagenblock B, in welchem eine schmelzebildende Stromauf-Anlagensektion bei 3 mit einer Preform erzeugenden Spritzgieß-Anlagensektion 2 fest verblockt ist, wobei zwischen den verblockten Anlagensektionen 1, 2 an geeigneter Stelle eine innenliegende Schnittstelle 4 vorliegt. Die Stromauf-Anlagensektion 1 enthält mindestens einen die Schmelze erzeugenden Extruder 23, vorzugsweise mit einer endseitigen Schmelze-Filtrationseinrichtung 6 stromauf der Schnittstelle 4. Die Schnittstelle 4 ist beispielsweise im Bereich eines nicht näher hervorgehobenen Shooting-Pots und/oder eines Heißkanalverteilers der Spritzgieß-Anlagensektion 2 angeordnet, stromauf von Werkzeugen einer Spritzgießeinrichtung 7, aus der die Preforms P chargenweise oder kontinuierlich abgegeben und, beispielsweise, in nicht gezeigten Kühlhülsen entlang einer Nachkühlstrecke 8 gefördert werden.

An der Schnittstelle 4 ist mindestens eine integrierte Inline-Messstation 9 für zumindest einen Qualitätsparameter der Schmelze vorgesehen. Zur Messstation 9 gehört eine Auswerteeinrichtung 21 für das Messresultat der Messstation 9. Die Auswerteeinrichtung 21 ist beispielsweise mit einer Anlagenprozesssteuerung CU verbunden, oder in diese eingegliedert, mit der der Prozessablauf in der Anlage gesteuert, geregelt und kontrolliert wird.

Stromauf des Anlagenblocks B (gegebenenfalls in diesen integriert bzw. mit der Stromauf-Anlagensektion 1 verblockt) ist eine Materialaufgabe-Anlagensektion 18 vor einer Materialaufbereitungs-Anlagensektion 19 und einer Materialdekontaminations-Anlagensektion 20 angeordnet. Innerhalb des Anlagenblocks B ist zwischen der Schnittstelle 4 und der Preform-Spritzgießeinrichtung 7 eine Ausschuss/Wiederaufbereitungs-Einrichtung 10 für ausgesonderte Schmelze angeschlossen. Im Anlagenblock B kann ferner entweder in der Nachkühlstrecke 8 oder ausgangs des Anlagenblocks B eine Einrichtung zum Aussondern von hergestellten Preforms P oder zur Weiterverwertung dieser gegebenenfalls mit zweiter Wahl-Qualität hergestellten Preforms oder deren Wiederaufbereitung vorgesehen sein.

Alternativ ist bei 9' eine weitere Messstation beispielsweise der Farbe der frisch hergestellten Preforms P beispielsweise in der Nachkühlstrecke 8 angeordnet, die mit Durchleuchtung und Farbdioden und Farbfiltern arbeitet.

In der Messstation wird als zumindest ein Qualitätsparameter der Schmelze eine Messung vorgenommen, beispielsweise der intrinsischen Viskosität und/oder des Gehalts ausgewählter Kontaminanten und/oder der Farbe. Ausgewählte Kontaminanten könnten beispielsweise Polygomere, Limonen und dgl. sein.

Die Messung des Acetaldehydgehalts erfolgt beispielsweise so, dass die Messstation einen Raum im Anlagenblock B umfasst, der mit Inertgas gespült wird, während ihn die Schmelze durchsetzt. In einem Abgasströmungsweg aus diesem Raum ist die Sonde eines Gaschromatographen platziert, der die Abgasströmung auf bestimmte Bestandteile überprüft. Die Inertgasspülung kann außerdem dazu dienen, u.a. den Acetaldehydgehalt zu reduzieren. Eine weitere Möglichkeit wäre die Anbringung eines sogenannten chemischen Sensors, der bei einer chemischen Reaktion am oder im Sensor das Vorhandensein von Acetaldehyd signalisiert.

Die Messung der intrinsischen Viskosität der Schmelze erfolgt über eine Temperaturerfassung und mittels einer über eine Blende erzeugten Druckdifferenz im Schmelzestrom, und zwar entweder im Schmelzehauptstrom oder einem Nebenstrom. Die Farbmessung der Schmelze wird beispielsweise über Durchleuchtung und Farbmessung des transmittierten Lichts durchgeführt, wobei das transmittierte Licht zur Auswertung, vorzugsweise, durch einen aus dem Raum der Messstation herausgeführten Lichtleiter weitergeleitet wird. Zweckmäßig werden zumindest der Acetaldehydgehalt und die intrinsische Viskosität in Kombination gemessen und ausgewertet, da eine zu hohe intrinsische Viskosität im Regelfall einen zu hohen Acetaldehydgehalt nach sich zieht.

Die Messung des mindestens einen Qualitätsparameters der in dem Anlagenblock B produzierten und direkt in der Spritzgieß-Anlagensektion 2 verarbeiteten Schmelze wird bezüglich des im Prozessablauf ermittelten Messresultats ausgewertet und beispielsweise mit Referenzwerten verglichen, vorzugsweise innerhalb eines vorbestimmten Toleranzbereiches. Bei Vorliegen eines positiven Auswertungsresultats, d.h., z.B. bei Herausfallen des Messresultats aus dem vorbestimmten Toleranzbereich, werden Prozessänderungs- und/oder Preform- bzw. Behälterqualifizierungs-Strategien abgeleitet, um sicherzustellen, dass bei der späteren Befüllung mit dem Nahrungsmittel der erforderliche Qualitätsstandard des Kunststoffbehälters gewährleistet ist. Prozessänderungsstrategien könnten beispielsweise bedeuten, dass bestimmte Prozessablaufparameter geändert oder geregelt werden, um den gemessenen Qualitätsparameter wieder in den Toleranzbereich zu bringen, beispielsweise bei exzessivem Anstieg des Acetaldehydgehalts und/oder der intrinsischen Viskosität eine Veränderung bzw. Reduktion der Plastifizierungsdrehzahl des Extruders 23 und/oder der Zykluszeit im Extruder und/oder die Änderung der Zudosierung von Acetaldehyd-Blockern und/oder einem Scavenger. Ferner ließe sich als Prozessänderungsstrategie das Mischungsverhältnis verschiedener eingesetzter Anfangskomponenten verändern bzw. regeln, beispielsweise das Verhältnis zwischen Rezyklat, Neuware mit niedriger intrinsischer Viskosität, Neuware mit hoher intrinsischer Viskosität, Farbstabilisator, und dgl.. Ferner könnte die Prozessänderungsstrategie auch das frühzeitige Ausschleusen mangelhafter Schmelze oder mangelhafter Preforms bzw. Kunststoffbehälter umfassen, sowie das Generieren einer Warnmeldung an den Maschinenbediener bei Überschreitung vorbestimmter Schwellenwerte, was schließlich bis zum automatischen Notstopp der Anlage betrieben werden kann, falls die Minderung des gemessenen und ausgewerteten Qualitätsparameters durch diese Strategien nicht in den Griff zu bekommen ist.

Kern der Anlage A ist, wie erwähnt, der Anlagenblock B aus den beiden direkt miteinander verblockten Anlagensektionen 1 und 2 und der an der Schnittstelle 4 platzierten Messstation 9 für zumindest einen Schmelze-Qualitätsparameter. Zweckmäßig ist jedoch auch die Streckblasmaschine 12, die die Kunststoffbehälter herstellt, bei 13 mit dem Anlagenblock B verblockt, und auch der Füller 14, und gegebenenfalls sogar die Verpackungs-Anlagensektion 16, wobei die jeweiligen Verblockungsbereiche mit 13, 15 und 17 angedeutet sind. Alternativ oder additiv könnten auch die Dekontaminations-Anlagensektion 20 und die Aufbereitungs-Anlagensektion 19 sowie die Materialaufgabe-Anlagensektion 18 miteinander verblockte Teile des Anlagenblocks B sein (Verblockungen gestrichelt angedeutet bei 25, 26, 27). In oder ausgangs der Blasform-Anlagensektion 12 ist eine Aussonderungseinrichtung 24 für mangelhafte, bereits hergestellte Kunststoffbehälter vorgesehen, die dann gegebenenfalls wieder aufbereitet oder als zweite Wahl-Qualität für unkritische Lebensmittel oder andere Befüllungen verwendet werden können.

Dank der Verblockung zumindest der Anlagensektionen 1, 2 wird die in der Schmelze aus dem stromauf Prozessablauf enthaltene Wärme mit in die Preform-Herstell-Anlagensektion transferiert, was den Gesamtwärmebedarf sowie den logistischen Aufwand reduzieren hilft. Zweckmäßig wird jedoch eine Gesamtanlage geschaffen, in der viele der oder alle Anlagensektionen miteinander verblockt sind, so dass zwischen den Anlagensektionen keine Fremdeinflüsse oder unabsichtliche oder auf mangelnder Prozesskenntnis basierende Manipulationen vorgenommen werden kann, und der Anwender eine Komplettanlage zur Verfügung hat, die ihm mit automatischem Prozessablauf Endprodukte mit hoher und gleichbleibend hoher Qualität bereitstellt, gegebenenfalls bereits verpackt zum Abtransport.

## Patentansprüche

1. Anlage (A) zur kontinuierlichen Herstellung von Preforms (P) unter Verwendung von zumindest Polyester-Rezyklat für Kunststoffbehälter für die Nahrungsmittel-Abfüllung, welche Anlage (A) zumindest wenigstens eine schmelzebildende Stromauf-Anlagensektion (1) und wenigstens eine Preforms (P) erzeugende Spritzgieß-Anlagensektion (2) und eine Anlagenprozesssteuerung (CU) umfasst, **dadurch gekennzeichnet, dass** zumindest die schmelzebildende Stromauf-Anlagensektion (1) zur direkten Verarbeitung der gebildeten Schmelze zu Preforms (P) in der Spritzgieß-Anlagensektion (2) mit der Spritzgieß-Anlagensektion (2) zu einem Anlagenblock (B) verblockt ist, und dass zur Ableitung von Prozessänderungs- und/oder Preformqualifizierungs-Strategien zwischen den verblockten Anlagesektionen (1, 2) an einer Schnittstelle (4) eine Inline-Messstation (9) mit Auswerteeinrichtung (21) für wenigstens einen im Betrieb der Anlage (A) gemessenen Qualitätsparameter der Schmelze vorgesehen ist, und dass die Inline-Messstation (9) wenigstens eine Baugruppe zum Messen der intrinsischen Viskosität und/oder ausgewählter Kontaminanten und/oder der Farbe, jeweils der gebildeten Schmelze, umfasst.

2. Anlage nach Anspruch 1, **dadurch gekennzeichnet, dass** der Anlagenblock (B) zumindest eine mit der Stromauf-Anlagensektion (1) verblockte Dekontaminations-Anlagensektion (20) umfasst.

3. Anlage nach Anspruch 2, **dadurch gekennzeichnet, dass** der Anlagenblock (B) zumindest die mit der Stromauf-Anlagensektion (1) verblockte Dekontaminations-Anlagensektion (20), eine verblockte Aufbereitungs-Anlagensektion (19) und eine verblockte Materialaufgabe-Anlagensektion (18) umfasst.

4. Anlage nach Anspruch 1, **dadurch gekennzeichnet, dass** die Auswerteeinrichtung (21), vorzugsweise über die Anlagenprozesssteuerung (CU), verbunden ist mit einer Prozessparameter-Regelvorrichtung zum frühzeitigen Ausschleusen mangelhafter Schmelze und/oder mit einer Kontaminanten-Blocker-Zudosiereinrichtung und/oder einer Anfangskomponenten-Mischungseinstelleinrichtung und/oder einer Preformaussonderungs- oder Qualifizier-Einrichtung.

5. Anlage nach Anspruch 1, **dadurch gekennzeichnet, dass** die Messstation (9) wenigstens einen mit Inertgas gespülten, von der Schmelze durchsetzten Raum aufweist, und dass in einem Abgasströmungsweg aus dem Raum wenigstens ein Gaschromatograph angeordnet ist.

6. Anlage nach Anspruch 1, **dadurch gekennzeichnet, dass** zur Messung der intrinsischen Viskosität eine Schmelze-Temperaturerfassung und eine -durchflussblende vorgesehen sind und/oder dass zur Farbmessung eine Schmelze-Durchleuchtvorrichtung vorgesehen ist, vorzugsweise mit einem nach außen aus der Messstation geführten Lichtleiter für transmittiertes Licht.

7. Anlage nach Anspruch 1, **dadurch gekennzeichnet, dass** die Stromauf-Anlagensektion (1) endseitig eine Schmelze-Filtrationseinrichtung (6) aufweist, und dass die Messstation (9) stromab der Schmelze-Filtrationseinrichtung (6) platziert ist, vorzugsweise im Bereich eines Shooting-Pots und/oder Heißkanalverteilers (22) der Spritzgieß-Anlagensektion (2).

8. Anlage nach Anspruch 1, **dadurch gekennzeichnet, dass** die Spritzgieß-Anlagensektion (2) eine Preform-Nachkühlstrecke (8) mit Kühlhülsen aufweist, und dass im Bereich der Nachkühlstrecke (8) eine Farbmessstation (9') angeordnet ist, vorzugsweise in Ausrichtung auf die Mündungsbereiche jeder in einer Kühlhülse platzierten Preform (P).

9. Anlage nach wenigstens einem der vorhergehenden Ansprüche, **dadurch gekennzeichnet, dass** der Anlagenblock (B) zusätzlich wenigstens eine mit der Spritzgieß-Anlagensektion (2) verblockte Behälter-Blasform-Anlagensektion (12) und, vorzugsweise, zumindest eine mit letzterer verblockte Füller-Anlagensektion (14) umfasst, und dass, vorzugsweise, mit der Füller-Anlagensektion (14) wenigstens eine Verpackungs-Anlagensektion (16) verblockt ist.

10. Verfahren zur kontinuierlichen Herstellung von Preforms (P) für Kunststoffbehälter für die Nahrungsmittel-Abfüllung unter Verwendung von zumindest Polyester-Rezyklat in einer zumindest wenigstens eine schmelzebildende Stromauf-Anlagensektion (1) und wenigstens eine Preform erzeugende Spritzgieß-Anlagensektion (2) umfassenden Anlage (A), **dadurch gekennzeichnet, dass** zum direkten Verarbeiten der gebildeten Schmelze in einem unterbrechungsfreien Prozessablauf zu den Preforms (P) die Stromauf-Anlagensektion (1) mit der Spritzgieß-Anlagensektion (2) verblockt wird, dass zum Ableiten von Prozessänderungs- und/oder Preformqualifizierungs-Strategien während des Prozessablaufs wenigstens ein Qualitätsparameter der Schmelze an einer innenliegenden Schnittstelle (4) gemessen und ausgewertet wird, und dass wenigstens ein ausgewählter Kontaminant der Schmelze gaschromatographisch gemessen wird, und/oder dass die intrinsische Viskosität der Schmelze anhand einer Temperaturdetektion und einer Schmelze-Blenden-Druckdifferenz gemessen wird und/oder dass mit Durchleuchtung der Schmelze die Farbe gemessen wird.

11. Verfahren nach Anspruch 11, **dadurch gekennzeichnet, dass** als ausgewählter Kontaminant Limonen und/oder Polygomere oder dergleichen gemessen werden.

12. Verfahren nach Anspruch 10, **dadurch gekennzeichnet, dass** der wenigstens eine Qualitätsparameter der Schmelze in einer Anlage (A) gemessen und ausgewertet wird, in der mit der Stromauf-Anlagensektion (1) wenigstens eine Dekontaminations-Anlagensektion (20) verblockt ist.

13. Verfahren nach Anspruch 10, **dadurch gekennzeichnet, dass** während des Prozessablaufes entweder kontinuierlich oder intermittierend gemessen und ausgewertet wird.

14. Verfahren nach Anspruch 10, **dadurch gekennzeichnet, dass** nach Auswerten des Messresultats mit positivem Auswertungsergebnis, vorzugsweise bei Herausfallen des Messresultats aus einem vorbestimmten Toleranzbereich, eine Plastifizierungsdrehzahl eines Extruders (23) und/oder eine Zykluszeit und/oder eine Zudosierung eines Acetaldehyd-Blockers und/oder Scavengers in einem Regelablauf verändert wird.

15. Verfahren nach Anspruch 10, **dadurch gekennzeichnet, dass** nach Auswerten des Messresultats mit positivem Auswertungsergebnis, vorzugsweise bei Herausfallen des Messresultats aus einem vorbestimmten Toleranzbereich, vorzugsweise bis Vorliegen eines wieder negativen Auswertungsergebnisses, weiterhin gebildete Schmelze ausgesondert wird oder mit weiterhin gebildeter Schmelze hergestellte Preforms (P) oder Behälter ausgesondert oder als qualitativ minderwertig identifiziert werden und/oder zumindest eine Anlagenbetriebswarnung generiert wird.

16. Verfahren nach Anspruch 15, **dadurch gekennzeichnet, dass** bei über eine vorbestimmte Dauer verbleibendem positivem Auswertungsergebnis automatisch ein Notstopp der Anlage eingesteuert wird.

17. Verfahren nach wenigstens einem der Ansprüche 10 bis 16, **dadurch gekennzeichnet, dass** der wenigstens eine Qualitätsparameter der Schmelze in einer Anlage (A) gemessen und ausgewertet wird, in der mit der Spritzgieß-Anlagensektion (2) zumindest eine Behälter-Blasform-Anlagensektion (12) und eine Füller-Anlagensektion (14) sowie, vorzugsweise, eine Verpackungs-Anlagensektion (16), in dieser Abfolge, miteinander verblockt sind, und/oder mit der Stromauf-Anlagensektion (1) wenigstens eine Dekontaminations-Anlagensektion (20) sowie eine Aufbereitungs-Anlagensektion (19) und eine Materialaufgabe-Anlagensektion (18) verblockt sind.
